# EUROPEAN PATENT SPECIFICATION

(11) **EP 2 760 271 B1**
(45) Date of publication and mention of the grant of the patent: **18.11.2015**
(21) Application number: 12781032.3
(22) Date of filing: 28.09.2012
(51) Int. Cl.: A01F 15/14, B08B 5/02

(54) **BALER AND METHOD OF CLEANING A BALER**
BALLENPRESSE UND VERFAHREN ZUM REINIGEN EINER BALLENPRESSE
BOTTELEUSE ET PROCÉDÉ DE NETTOYAGE D'UNE BOTTELEUSE

(30) Priority: 30.09.2011 GB 201116987
(43) Date of publication of application: 06.08.2014
(73) Proprietor: Kuhn-Geldrop BV, 5660 AA Geldrop (NL)
(72) Inventor: VAN DEN WILDENBERG, Leonardus Johannes, NL-6021 CT Budel (NL)
(74) Representative: Raynor, Simon Mark
(86) International application number: PCT/EP2012/004085
(87) International publication number: WO 2013/050126

(56) References cited:
- EP-A1- 1 813 788
- EP-A1- 2 208 413
- EP-A1- 2 289 305
- DE-A1- 19 528 658

## Description

The present invention relates to a baler and a method of cleaning a baler. In particular but not exclusively the invention relates to a baler for baling an agricultural crop.

For efficient transport and storage, agricultural products like hay, straw and silage may be compressed into bales of a parallelepiped shape, which are known as 'square' bales. After compression of the bale material the shape and the compression of the bale is maintained by binding the bale with twines that are looped around the compressed bale material. The ends of the twine are then knotted together.

Typically, compression of the bale material is performed by a reciprocating plunger press baler. A typical baler of this type is described in US patents 4074623 and 4142746 to Hesston Corporation. This baler includes a pick-up device for picking up bale material from the ground, a feed device and a baling chamber comprising an open ended channel through which bale material is forced by a reciprocating plunger. The plunger is driven in a linear direction between a withdrawn position in front of the baling chamber and an extended position in which it extends into the baling chamber. When the plunger is in the withdrawn position the baling chamber is loaded with the bale material. The plunger is then driven into the baling chamber so that this new material is compressed against a body of compressed material already in the baling chamber. The newly compacted material is called a 'wad'. The friction of the compressed material with the walls of the baling chamber channel provides a resistive force allowing for compression of the new material that is introduced into the baling chamber in front of the plunger.

This process is repeated until the body of compressed material in the baling chamber has reached the required length to form a bale. The body of compressed material is then bound with twine, which is knotted by a knotter device. The whole process is then repeated to form another bale. As the new bale is formed the previously formed bale is gradually pushed towards the outlet end of the baling chamber and is eventually ejected from the chamber.

During the baling process debris, including for example some of the material to be baled, dirt and other materials, may be blown or thrown out of the pick-up device or the baling system and may fall onto the frame of the baler and/or functional parts of the baler. This collection of debris can lead to functional problems: e.g. debris on the knotter device can prevent the knotter from knotting the twine ends and an accumulation of debris can also lead to excessive wear of mechanical parts of the machine, for instance the bearings.

EP2289305A describes these problems and discloses a solution in which an air blower is used to clear debris from the knotter region and other regions of the baler. The use of cleaning blowers is also described in for instance in US7318376 and US3020829.

In a system described in EP2208413, air is supplied from the blower to a manifold having a large number of air outlets, which are aligned to clean collected debris simultaneously from each of the transversely spaced knotters. For effective cleaning all the blower outlets require sufficient air flow with sufficient air speed to remove the accumulated debris. Given the large number of outlets this requires a big blower with a high power demand. Also, cleaning is provided only in the region of the knotters: supplying air to clean other regions of the machine would require an even bigger blower.

It is an object of the present invention to provide a baler and a method of cleaning a baler that mitigate the aforesaid disadvantage.

According to one aspect of the present invention there is provided a baler for baling a fibrous material, including a cleaning system for removing debris from the baler in a plurality of locations, the cleaning system comprising an air blower, a conduit system having an inlet and a plurality of outlets for delivering air from the blower to said plurality of locations, and an air flow control mechanism for controlling the delivery of air from the inlet to the plurality of outlets, wherein the air flow control mechanism is configured to deliver the air alternately to one or more of the outlets.

By controlling the air flow so that the air is delivered alternately to one or more of the outlets, that is, so that the air is not delivered simultaneously to all of the outlets, each outlet to which air is delivered can receive a large flow of air without requiring a large air blower. The air flow can therefore be concentrated where cleaning is most required. Also, by delivering air alternately to each of the outlets, effective cleaning can still be provided at numerous locations. Efficient cleaning can thus be ensured without requiring a large blower. The energy consumption, as well as the weight and cost of the system, can thus be minimized.

The air flow control mechanism may include a plurality of independently operable valves for controlling the flow of air from the inlet to the outlets. Alternatively, the conduit system may include an inlet duct and a plurality of outlet ducts, the air flow control mechanism comprising a transfer device configured to connect the inlet duct alternately to one or more of the outlet ducts.

The air flow control mechanism may be configured to deliver air individually to at least one of the outlets. Thus, the full flow of air can be concentrated at a single outlet for maximum cleaning effect. Alternatively, or in addition, the air flow control mechanism may be configured to deliver air simultaneously to at least one set of outlets, thereby providing efficient cleaning simultaneously at a plurality of outlets (comprising the selected set), while delivering no air to one or more other outlets.

The air flow control mechanism may be configured to deliver air to each of the outlets in a consecutive sequence. This provides a simple but efficient mechanism for distributing the air flow to each the outlets in turn. Alternatively, the air flow control mechanism may be configured to deliver air to each of the outlets in a non-consecutive sequence. This allows air to be delivered more frequently to locations requiring a higher level of cleaning and less frequently to other locations where less cleaning is required or cleaning is less critical. Optionally, the air flow control mechanism may be configured to deliver air to each of the outlets in a programmable sequence, allowing the cleaning system to be adapted to changing requirements or different operating configurations. Alternatively, the air flow control mechanism may be configured to deliver air to each of the outlets automatically in response to sensor signals indicating an accumulation of debris in the vicinity of the outlets.

In a preferred embodiment, the baler is an agricultural baler for baling an agricultural crop. Preferably, the baler is a square baler (a baler for making square bales) having a baling chamber comprising an open-ended channel and a plunger for compressing fibrous materials in the baling chamber. Advantageously, the baler includes a knotter device and the cleaning system is configured to remove debris from the baler in the vicinity of the knotter device, thus ensuring that the knotting operation is not affected by debris.

According to another aspect of the invention there is provided a method of cleaning a baler using a cleaning system comprising an air blower, a conduit system having an inlet and a plurality of outlets, and an air flow control mechanism for controlling the delivery of air from the inlet to the plurality of outlets, the method comprising blowing air with the air blower and delivering the air via the conduit system alternately to one or more of the outlets to remove debris from the baler in a plurality of locations.

Preferably, the baler comprises a baler according to any one of the preceding statements of invention.

Advantageously, the air flow control mechanism includes a plurality of independently operable valves and the method comprises operating the valves independently to control the flow of air from the inlet to the outlets.

Advantageously, the conduit system includes an inlet duct and a plurality of outlet ducts and the air flow control mechanism includes a transfer device, the method comprising controlling the transfer device to connect the inlet duct alternately to one or more of the outlet ducts.

Advantageously, the method includes delivering air individually to at least one of the outlets. Alternatively, or in addition, the method includes delivering air simultaneously to at least one set of outlets.

The method may include delivering air to each of the outlets in a consecutive sequence. Alternatively, the method may include delivering air to each of the outlets in a non-consecutive sequence, preferably a programmable sequence. Alternatively, the method may include delivering air to each of the outlets automatically in response to sensor signals indicating an accumulation of debris in the vicinity of the outlets.

Various embodiments of the invention will now be described by way of example with reference to the accompanying drawings, wherein:
Figure 1 is an isometric view showing part of a baling machine according to a first embodiment of the invention;
Figure 2 is an isometric view showing part of a cleaning system for a baling machine, according to a second embodiment of the invention, and
Fig. 3 is an isometric view showing part of a cleaning system for a baling machine, according to a third embodiment of the invention.

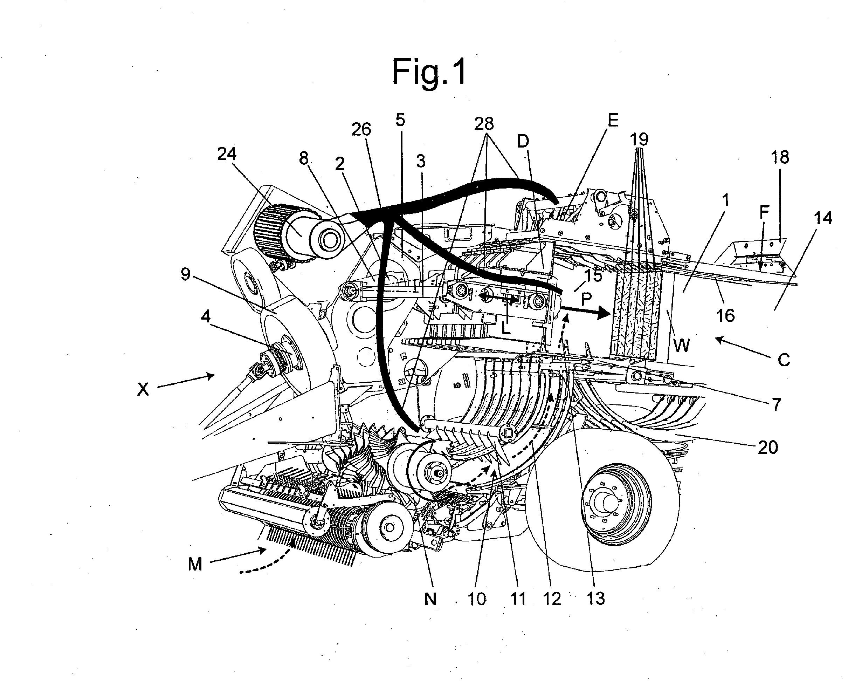

The baling machine or baler shown in Figure 1 includes a baling chamber C and a plunger D that can be driven into the baling chamber C in a reciprocating manner. The baling machine also includes a pick up mechanism M for picking up cut bale material such as grass and straw from the ground, a feed mechanism N for feeding the bale material into the baling chamber C and a driveline X for transmitting drive to the plunger D from the drive output of a towing vehicle (not shown). These components are all conventional and may for example be as described in US patents 4074623 and 4142746. The baling machine also includes a binding device E for binding the bale with binding twine. This binding device may for example be as described in US 4074623.

The baling chamber C comprises an open ended bale-forming channel through which bale material 1 is forced by the reciprocating plunger D. In this example, the plunger D is driven from a rotating drive axle 2 via a crank 8 and the plunger rod 3. The drive axle 2 comprises an output shaft of a drive gearbox 5 that also has a drive input shaft 4 through which it receives drive from the drive output of a towing vehicle (not shown). The gearbox 5 is mounted on a frame 7 of the baling machine. The drive input shaft carries a large flywheel 9 for smooth operation of the baler.

Typically the material to be baled is taken up from the ground by the pick-up device M. The feed device N feeds the material to an intermediate material buffer 10. The feed device N may also be used to cut the material. If sufficient material is collected in the intermediate buffer 10, a stuffer 11 forwards the material 12 into the bale chamber C in front of the plunger D, ready to be compressed.

The open ended channel that forms the baling chamber C has an inlet end 13 and an outlet end 14. The bale-forming channel is defined by two side panels 15 (one of which has been omitted in Fig. 1 to show the interior of the baling chamber C), a top panel 16 and a bottom panel 17. The top panel 16 and/or one or both of the side panels 15 may be pivotable about its upstream end allowing the cross-sectional area of the bale-forming channel to be adjusted. An adjusting mechanism 18 for adjusting the positions of the adjustable panels is provided towards the outlet end 14 of the baling chamber C. The adjusting mechanism 18 applies a biasing force F to the adjustable panels 15, 16, to control the level of friction between the panels and the compressed material 1 in the baling chamber C. The adjustable panels 15, 16 thus comprise friction control elements.

The plunger D is driven in a substantially linear direction L between two end positions comprising respectively a withdrawn position in front of the baling chamber C and an extended position in which it extends into the channel of the baling chamber C. When the plunger is in the withdrawn position the baling chamber C is loaded with the bale material to be compressed. The plunger D is then driven into the baling chamber so that this new material is compressed against a body of compressed material 1 already in the baling chamber C. The newly compacted material forms a wad W that is added to the already compacted material 1 in the channel. The friction of the compressed material 1 with the panels 15, 16, 17 of the baling chamber C provides a resistive force allowing for compression of the new material that is introduced into the baling chamber C in front of the plunger D.

After compression, the wad W of newly compressed material and the compressed material 1 already in the baling chamber C are moved together towards the outlet end 14 of the baling chamber until the plunger D reaches its fully extended end position. The plunger D then moves in the opposite direction towards its withdrawn position so that the baling chamber C can be reloaded with new material to be compressed.

The bale of compressed material 1 is held in compression after leaving the machine by twines 19 that are looped around the body of compressed material. This binding process can be performed as follows.

At the start of the baling process two lengths of twine from spools (not shown) on opposite sides of the baling chamber C are connected to one another by tying the ends of the twines together using the knotter device E. As the bale material is compacted in the baling chamber C the spools feed twine to the baling chamber C on either side of the bale material. On one side of the baling chamber C the twine passes through the tip of a baling needle 20. When the body of compressed bale material 1 has reached its full length, between two successive compressing strokes, the needle 20 brings the twine as a loop to the other side of the baling chamber C. The knotter device E then knots the twine, joining an end of the twine loop that was brought around the compressed bale by the needle 20 to an end of the twine that was supplied by the spool on other side of the baling chamber (the same side as the knotter device E). The needle 20 is then retracted and a new bale is started.

In embodiments of the invention as illustrated in the drawings, a cleaning blower 24 is configured to be connected alternately via a conduit 26 to different cleaning outlets 28 and/or to different sets of cleaning outlets. Thus, air can be delivered to different regions of the baler machine and this air can be concentrated on each of these regions in turn, ensuring effective cleaning. The advantage of this arrangement is that a smaller blower 24 can be used and less power is required to clean the baler at multiple locations.

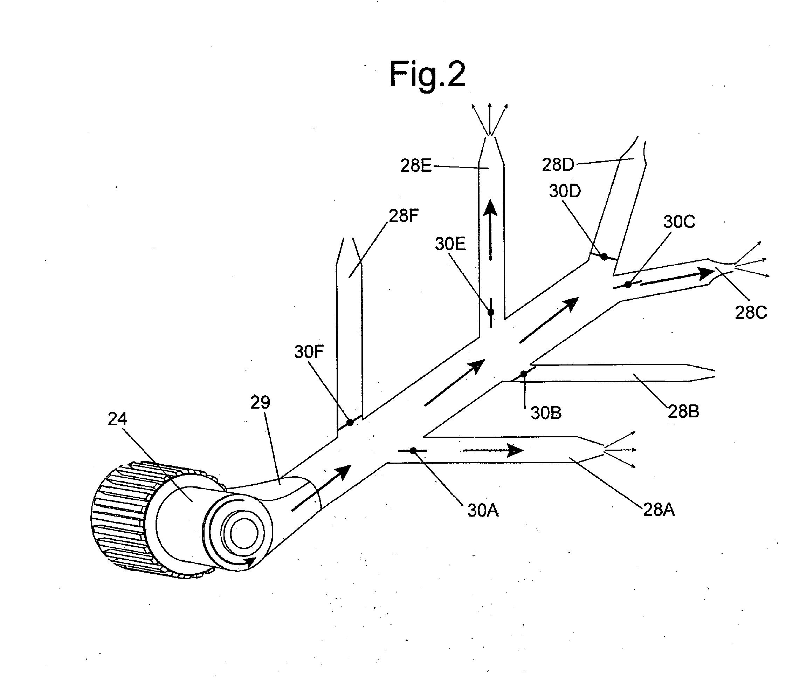

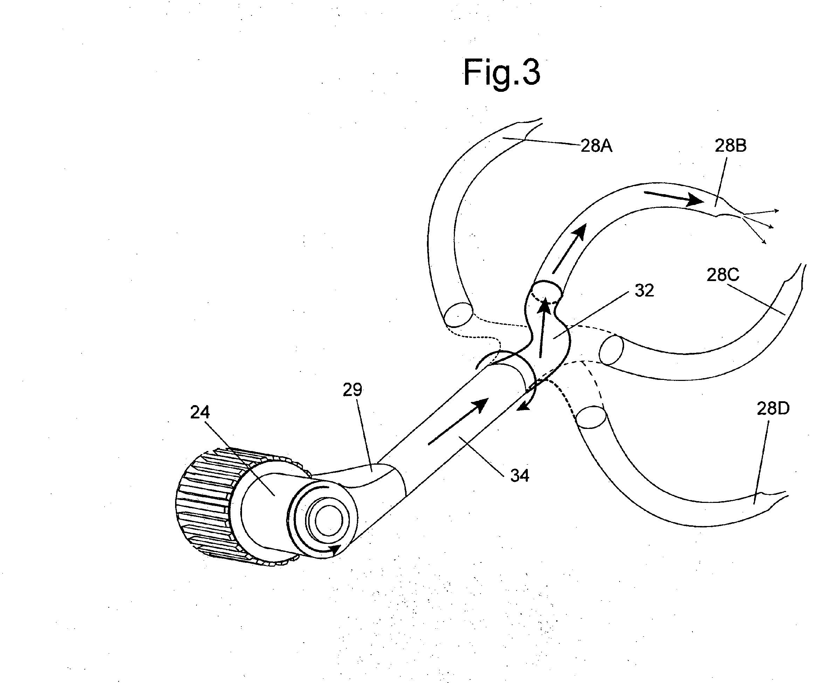

The cleaning air may be delivered alternately to each of the outlets 28 or sets of outlets in either a fixed sequence, for example as illustrated in Fig.3, or in a changeable sequence for example as illustrated in Fig.2.

Thus, the delivery of air from the outlet 29 of the blower 24 to the cleaning outlets 28A-F could be controlled by allowing or blocking the flow of air with valves 30A-F as shown in Fig. 2, wherein air is supplied to cleaning outlets 28A,C,E that are in use by opening valves 30A,C,E in the ducts leading to those outlets, while air is blocked from outlets 28B,D,F that are not in use by closing the valves 30B,D,F in the ducts leading to those outlets. Opening and closing of the valves 30A-F may be controlled either manually by an operator (via valve actuators) or by an automatic control device, either according to a predetermined sequence or in response to signals from sensors within the baling machine, which sense a build-up of debris in the vicinity of the sensors.

Alternatively, as shown in Fig. 3, air can be supplied in a fixed sequence to each of the outlets 28A-D by connecting the blower outlet 29 to each of the outlets in turn, for example by means of a rotating transfer duct 32 located between an inlet duct 34 and the outlet ducts 28A-D. Thus, at any one time, air is supplied only to the cleaning outlet 28B that is in use and no air is supplied to the cleaning outlets 28A,C,D that are not in use. The rotating transfer duct 32 may be arranged to rotate continuously so that air is supplied to each of the outlet ducts 28A-D in a fixed sequence, or rotation of the transfer duct 32 may be controlled so that the outlet to which the air is supplied can be selected.

Other arrangements for the transfer duct and the outlet ducts are of course possible: for example the transfer duct may be arranged to move transversely past a linear array of outlet ducts.

Optionally, the blower 24 may be operated at intervals of time or in response to signals from debris sensors to provide further overall energy savings.

Preferably the blower 24 is mechanically driven by the flywheel 9 on the main gear-box 5, for example through a simple drive line.

## Claims

1. A baler for baling a fibrous material, including a cleaning system for removing debris from the baler in a plurality of locations, the cleaning system comprising an air blower (24), a conduit system (26) having an inlet (34) and a plurality of outlets (28) for delivering air from the blower to said plurality of locations, and an air flow control mechanism (30A-F, 32) for controlling the delivery of air from the inlet (34) to the plurality of outlets (28); **characterised in that** the air flow control mechanism (30A-F, 32) is configured to deliver the air alternately to one or more of the outlets.

2. A baler according to claim 1, wherein the air flow control mechanism (30A-F, 32) includes a plurality of independently operable valves (30A-F) for controlling the flow of air from the inlet to the outlets.

3. A baler according to claim 1, wherein the conduit system (26) includes an inlet duct (34) and a plurality of outlet ducts (28A-D), and the air flow control mechanism comprises a transfer device (32) configured to connect the inlet duct alternately to one or more of the outlet ducts.

4. A baler according to any one of the preceding claims, wherein the air flow control mechanism (30A-F, 32) is configured to deliver air individually to at least one of the outlets.

5. A baler according to any one of the preceding claims, wherein the air flow control mechanism is configured to deliver air simultaneously to at least one set of outlets.

6. A baler according to any one of the preceding claims, wherein the air flow control mechanism (30A-F, 32) is configured to deliver air to each of the outlets in a consecutive sequence.

7. A baler according to any one of claims 1 to 5, wherein the air flow control mechanism (30A-F, 32) is configured to deliver air to each of the outlets in a non-consecutive sequence.

8. A baler according to claim 7, wherein the air flow control mechanism (30A-F, 32) is configured to deliver air to each of the outlets in a programmable sequence.

9. A baler according to claim 7, wherein the air flow control mechanism (30A-F, 32) is configured to deliver air to each of the outlets automatically in response to sensor signals indicating an accumulation of debris in the vicinity of the outlets.

10. A baler according to any one of the preceding claims, the baler comprising a square baler having a baling chamber (C) comprising an open-ended channel and a plunger (D) for compressing fibrous materials in the baling chamber.

11. A baler according to claim 10, wherein the baler includes a knotter device (E) and the cleaning system is configured to remove debris from the baler in the vicinity of the knotter device.

12. A method of cleaning a baler using a cleaning system comprising an air blower (24), a conduit system (26) having an inlet and a plurality of outlets, and an air flow control mechanism (30A-F, 32) for controlling the delivery of air from the inlet (34) to the plurality of outlets (28), the method comprising blowing air with the air blower (24) and delivering the air to one or more of the outlets (28) to remove debris from the baler in a plurality of locations; **characterised by** delivering the air alternately to said outlets.

13. A method according to claim 12, wherein the baler is as defined by any one of claims 1 to 11.

14. A method according to claim 12 or claim 13, wherein air flow control mechanism (30A-F, 32) includes a plurality of independently operable valves (30A-F) and the method comprises operating the valves independently to control the flow of air from the inlet to the outlets.

15. A method according to claim 12 or claim 13, wherein the conduit system includes an inlet duct (34) and a plurality of outlet ducts (28A-D) and the air flow control mechanism (30A-F, 32) includes a transfer device (32), the method comprising controlling the transfer device to connect the inlet duct alternately to one or more of the outlet ducts.

## Patentansprüche

1. Ballenpresse zum Bündeln von faserigem Material, die ein Reinigungssystem zum Entfernen von Schmutz aus der Ballenpresse an einer Vielzahl von Stellen umfasst, wobei das Reinigungssystem ein Luftgebläse (24), ein Leitungssystem (26) mit einem Einlass (34) und einer Vielzahl von Auslässen (28) zum Zuführen von Luft von dem Gebläse zu der Vielzahl von Stellen, und einen Luftstromsteuermechanismus (30A-F, 32) zum Steuern der Zuführung von Luft von dem Einlass (34) zu der Vielzahl von Auslässen (28) umfasst; **dadurch gekennzeichnet, dass** der Luftstromsteuermechanismus (30A-F, 32) konfiguriert ist, um die Luft abwechselnd zu einem oder mehreren der Auslässe zuzuführen.

2. Ballenpresse nach Anspruch 1, wobei der Luftstromsteuermechanismus (30A-F, 32) eine Vielzahl von unabhängig betätigbaren Ventilen (30A-F) zur Steuerung des Luftstroms von dem Einlass zu den Auslässen umfasst.

3. Ballenpresse nach Anspruch 1, wobei das Leitungssystem (26) einen Einlasskanal (34) und eine Vielzahl von Auslasskanälen (28A-D) umfasst, und der Luftstromsteuermechanismus eine Übertragungseinrichtung (32) umfasst, die konfiguriert ist, um den Einlasskanal abwechselnd mit einem oder mehreren der Auslasskanäle zu verbinden.

4. Ballenpresse nach einem der vorhergehenden Ansprüche, wobei der Luftstromsteuermechanismus (30A-F, 32) konfiguriert ist, um Luft jeweils wenigstens einem der Auslässe zuzuführen.

5. Ballenpresse nach einem der vorhergehenden Ansprüche, wobei der Luftstromsteuermechanismus konfiguriert ist, um Luft gleichzeitig wenigstens einem Satz von Auslässen zuzuführen.

6. Ballenpresse nach einem der vorhergehenden Ansprüche, wobei der Luftstromsteuermechanismus (30A-F, 32) konfiguriert ist, um Luft jedem der Auslässe in einer aufeinanderfolgenden Sequenz zuzuführen.

7. Ballenpresse nach einem der Ansprüche 1 bis 5, wobei der Luftstromsteuermechanismus (30A-F, 32) konfiguriert ist, um Luft jedem der Auslässe in einer nicht aufeinanderfolgenden Sequenz zuzuführen.

8. Ballenpresse nach Anspruch 7, wobei der Luftstromsteuermechanismus (30A-F, 32) konfiguriert ist, um Luft jedem der Auslässe in einer programmierbaren Sequenz zuzuführen.

9. Ballenpresse nach Anspruch 7, wobei der Luftstromsteuermechanismus (30A-F, 32) konfiguriert ist, um Luft jedem der Auslässe automatisch in Reaktion auf Sensorsignale, die eine Ansammlung von Schmutz in der Nähe der Auslässe anzeigen, zuzuführen.

10. Ballenpresse nach einem der vorhergehenden Ansprüche, wobei die Ballenpresse eine quadratische Ballenpresse mit einer Presskammer (C) umfasst, die einen nach oben offenen Kanal und einen Kolben (D) umfasst, um faseriges Material in der Presskammer zu komprimieren.

11. Ballenpresse nach Anspruch 10, wobei die Ballenpresse eine Knüpfungsvorrichtung (E) umfasst und das Reinigungssystem konfiguriert ist, um Schmutz von der Ballenpresse in der Nähe der Knüpfungsvorrichtung zu entfernen.

12. Verfahren zum Reinigen einer Ballenpresse mit einem Reinigungssystem, das ein Luftgebläse (24) umfasst, ein Leitungssystem (26) mit einem Einlass und einer Vielzahl von Auslässen und einen Luftstromsteuermechanismus (30A-F, 32) zum Steuern der Luftzufuhr von dem Einlass (34) zu der Vielzahl von Auslässen (28), wobei das Verfahren das Blasen von Luft mit dem Luftgebläse (24) und die Luftzufuhr zu einem der einen oder mehreren Auslässe (28) umfasst, um Schmutz von der Ballenpresse in einer Vielzahl von Stellen zu entfernen; **gekennzeichnet durch** die abwechselnde Luftzufuhr zu den Auslässen.

13. Verfahren nach Anspruch 12, wobei die Ballenpresse gemäß einem der Ansprüche 1 bis 11 definiert ist.

14. Verfahren nach Anspruch 12 oder Anspruch 13, wobei der Luftstromsteuermechanismus (30A-F, 32) eine Vielzahl von unabhängig betätigbaren Ventilen (30A-F) und das Verfahren umfasst, die Ventile unabhängig zu betätigen, um den Luftstrom von dem Einlass zu den Auslässen zu steuern.

15. Verfahren nach Anspruch 12 oder Anspruch 13, wobei das Leitungssystem einen Einlasskanal (34) und eine Vielzahl von Auslasskanälen (28A-D) umfasst und der Luftstromsteuermechanismus (30A-F, 32) eine Übertragungseinrichtung (32) umfasst, wobei das Verfahren das Steuern der Übertragungseinrichtung umfasst, um den Einlasskanal abwechselnd mit einem oder mehreren der Auslasskanäle zu verbinden.

## Revendications

1. Botteleuse permettant de compacter un matériau fibreux, comprenant un système de nettoyage servant à retirer les débris de la botteleuse dans une pluralité d'endroits, le système de nettoyage se composant d'une soufflante d'air (24), d'un système de canalisation (26) ayant une entrée (34) et une pluralité de sorties (28) servant à distribuer de l'air entre la soufflante et ladite pluralité d'endroits, et d'un mécanisme de régulation du débit d'air (30A-F, 32) servant à réguler la distribution de l'air entre l'entrée (34) et la pluralité de sorties (28) ; **caractérisée en ce que** le mécanisme de régulation du débit d'air (30A-F, 32) peut distribuer de l'air en alternance à une ou plusieurs sorties.

2. Botteleuse selon la revendication 1, dans laquelle le mécanisme de régulation du débit d'air (30A-F, 32) comprend une pluralité de vannes pouvant être actionnées indépendamment (30A-F) et servant à réguler le débit d'air entre l'entrée et les sorties.

3. Botteleuse selon la revendication 1, dans laquelle le système de canalisation (26) comprend un conduit d'entrée (34) et une pluralité de conduits de sortie (28A-D), et le mécanisme de régulation du débit d'air comprend un dispositif de transfert (32) pouvant relier le conduit d'entrée en alternance à un ou plusieurs conduits de sortie.

4. Botteleuse selon l'une quelconque des revendications précédentes, dans laquelle le mécanisme de régulation du débit d'air (30A-F, 32) peut distribuer de l'air individuellement à au moins l'une des sorties.

5. Botteleuse selon l'une quelconque des revendications précédentes, dans laquelle le mécanisme de régulation du débit d'air peut distribuer de l'air simultanément à au moins un ensemble de sorties.

6. Botteleuse selon l'une quelconque des revendications précédentes, dans laquelle le mécanisme de régulation du débit d'air (30A-F, 32) peut distribuer de l'air à chacune des sorties dans un ordre consécutif.

7. Botteleuse selon l'une quelconque des revendications 1 à 5, dans laquelle le mécanisme de régulation du débit d'air (30A-F, 32) peut distribuer de l'air à chacune des sorties dans un ordre non consécutif.

8. Botteleuse selon la revendication 7, dans laquelle le mécanisme de régulation du débit d'air (30A-F, 32) peut distribuer de l'air à chacune des sorties dans un ordre programmable.

9. Botteleuse selon la revendication 7, dans laquelle le mécanisme de régulation du débit d'air (30A-F, 32) peut distribuer de l'air automatiquement à chacune des sorties, en réponse à des signaux de capteur indiquant une accumulation de débris à proximité des sorties.

10. Botteleuse selon l'une quelconque des revendications précédentes, se composant d'une botteleuse à bottes rectangulaires ayant une chambre de compression (C) comprenant un canal ouvert et un piston (D) servant à comprimer les matériaux fibreux dans la chambre de compression.

11. Botteleuse selon la revendication 10, dans laquelle la botteleuse comprend un dispositif de nouage (E) et le système de nettoyage peut retirer les débris se trouvant dans la botteleuse à proximité du dispositif de nouage.

12. Procédé de nettoyage d'une botteleuse utilisant un système de nettoyage se composant d'une soufflante d'air (24), d'un système de canalisation (26) ayant une entrée et une pluralité de sorties, et d'un mécanisme de régulation du débit d'air (30A-F, 32) servant à réguler la distribution de l'air entre l'entrée (34) et la pluralité de sorties (28), le procédé comprenant les étapes consistant à souffler de l'air à l'aide de la soufflante d'air (24) et à distribuer de l'air à une ou plusieurs sorties (28) pour retirer les débris de la botteleuse dans une pluralité d'endroits ; **caractérisée par** l'étape consistant à distribuer de l'air en alternance auxdites sorties.

13. Procédé selon la revendication 12, dans lequel la botteleuse est telle que définie dans l'une quelconque des revendications 1 à 11.

14. Procédé selon la revendication 12 ou 13, dans lequel le mécanisme de régulation du débit d'air (30A-F, 32) comprend une pluralité de vannes pouvant être actionnées indépendamment (30A-F) et le procédé comprend l'étape consistant à actionner les vannes indépendamment pour réguler le débit d'air entre l'entrée et les sorties.

15. Procédé selon la revendication 12 ou 13, dans lequel le système de canalisation comprend un conduit d'entrée (34) et une pluralité de conduits de sortie (28A-D), et le mécanisme de régulation du débit d'air (30A-F, 32) comprend un dispositif de transfert (32), le procédé comprenant l'étape consistant à commander le dispositif de transfert pour relier le conduit d'entrée en alternance à un ou plusieurs conduits de sortie.
